# EUROPÄISCHE PATENTSCHRIFT

(11) **EP 3 811 299 B1**
(45) Veröffentlichungstag und Bekanntmachung des Hinweises auf die Patenterteilung: **11.03.2026**
(21) Anmeldenummer: 19728054.8
(22) Anmeldetag: 03.06.2019
(51) Int. Cl.: G06N 3/063, G06N 3/045, G06N 3/082, G06F 1/32

(54) **SELEKTIVE DEAKTIVIERUNG VON RECHENEINHEITEN FÜR KÜNSTLICHE NEURONALE NETZWERKE**
SELECTIVE DEACTIVATION OF COMPUTING UNITS FOR ARTIFICIAL NEURAL NETWORKS
DÉSACTIVATION SÉLECTIVE D'UNITÉS DE CALCUL POUR RÉSEAUX DE NEURONES ARTIFICIELS

(30) Priorität: 19.06.2018 DE 102018209897; 09.04.2019 DE 102019205079
(43) Veröffentlichungstag der Anmeldung: 28.04.2021
(73) Patentinhaber: Robert Bosch GmbH, 70442 Stuttgart (DE)
(72) Erfinder: GUNTORO, Andre, 71263 Weil Der Stadt (DE); RUNGE, Armin, 71272 Renningen (DE); SCHIRMER, Juergen, 69124 Heidelberg (DE); TOPP, Jaroslaw, 71272 Renningen (DE); SCHORN, Christoph, 71229 Leonberg (DE); VOGEL, Sebastian, 76744 Schaidt (DE)
(86) Internationale Anmeldenummer: PCT/EP2019/064307
(87) Internationale Veröffentlichungsnummer: WO 2019/243029

(56) Entgegenhaltungen:
- US-A1- 2006 095 911
- US-A1- 2015 033 054
- US-A1- 2016 379 109
- US-A1- 2017 277 183
- SRIMAT CHAKRADHAR ET AL: "A dynamically configurable coprocessor for convolutional neural networks", PROCEEDINGS OF THE 37TH ANNUAL INTERNATIONAL SYMPOSIUM ON COMPUTER ARCHITECTURE, ISCA '10, ACM PRESS, NEW YORK, NEW YORK, USA, 19 June 2010 (2010-06-19), pages 247 - 257, XP058174461, ISBN: 978-1-4503-0053-7, DOI: 10.1145/1815961.1815993
- WEIZHE HUA ET AL: "Channel Gating Neural Networks", ARXIV.ORG, CORNELL UNIVERSITY LIBRARY, 201 OLIN LIBRARY CORNELL UNIVERSITY ITHACA, NY 14853, 29 May 2018 (2018-05-29), XP080884351
- JI LIN ET AL: "Runtime Neural Pruning", ADVANCES IN NEURAL INFORMATION PROCESSING SYSTEMS, vol. 31, 4 December 2017 (2017-12-04), pages 2181 - 2191, XP055534354
- LANLAN LIU ET AL: "Dynamic Deep Neural Networks: Optimizing Accuracy-Efficiency Trade-offs by Selective Execution", ARXIV.ORG, CORNELL UNIVERSITY LIBRARY, 201 OLIN LIBRARY CORNELL UNIVERSITY ITHACA, NY 14853, 2 January 2017 (2017-01-02), XP081308326

## Beschreibung

Die vorliegende Erfindung betrifft ein Verfahren zum Betreiben künstlicher neuronaler Netzwerke, das eine selektive und rücksetzbare Deaktivierung von Hardwarekomponenten zur Laufzeit des Netzwerks vorsieht, sowie eine zugehörige Hardwarearchitektur.

### Stand der Technik

Ein künstliches neuronales Netzwerk, KNN, umfasst eine Eingangsschicht, mehrere Verarbeitungsschichten und eine Ausgangsschicht. Eingangsgrößen werden an der Eingangsschicht in das KNN eingelesen und auf ihrem Weg durch die Verarbeitungsschichten zur Ausgangsschicht anhand einer Verarbeitungskette verarbeitet, die in der Regel parametrisiert ist. Beim Training des KNN werden diejenigen Werte für die Parameter der Verarbeitungskette ermittelt, mit denen die Verarbeitungskette einen Satz Lern-Werte für die Eingangsgrößen optimal auf einen zugehörigen Satz Lern-Werte für die Ausgangsgrößen abbildet.

Die Stärke von KNN liegt darin, dass sie sehr hochdimensionale Daten, wie etwa hochauflösende Bilder, massiv parallel verarbeiten können, indem in jeder Schicht mehrere physische Recheneinheiten zusammenwirken. Ein Beispiel für eine aus vielen Recheneinheiten zusammengesetzte Hardwarearchitektur für ein KNN ist in der GB 2 552 242 A offenbart. Diese Schrift beschäftigt sich damit, den Hardwareaufwand und den Stromverbrauch für die Realisierung des KNN zu reduzieren. Zu diesem Zweck wird die in einer Schicht anfallende Rechenarbeit in zwei Teilschritte aufgeteilt, und die in diesen Teilschritten jeweils erhaltenen Teilergebnisse werden zum Endergebnis kombiniert.

Aus der Veröffentlichung Chakradhar, S., Sankaradas, M., Jakkula, V., & Cadambi, S. (2010, June). A dynamically configurable coprocessor for convolutional neural networks. In Proceedings of the 37th annual international symposium on Computer architecture (pp. 247-257) ist ein CNN (engl. Convolutional neural network)-Compiler bekannt, welcher automatisch eine hochabstrakte Netzspezifikation in ein paralleles Mikroprogramm übersetzt.

### Offenbarung der Erfindung

Im Rahmen der Erfindung wurde eine Hardwarearchitektur für ein künstliches neuronales Netzwerk, KNN, entwickelt. Das KNN umfasst eine Aneinanderreihung aus einer Eingangsschicht, mehreren Verarbeitungsschichten und einer Ausgangsschicht. Jede Schicht bildet einen Satz Eingangsgrößen auf einen Satz Ausgangsgrößen ab. Dabei sind Ausgangsgrößen der Eingangsschicht und einer jeden Verarbeitungsschicht Eingangsgrößen der jeweils in der Aneinanderreihung folgenden Schicht. Die Eingangsgrößen der Eingangsschicht sind zugleich auch die Eingangsgrößen des KNN als Ganzes. Die Ausgangsgrößen der Ausgangsschicht sind zugleich auch die Ausgangsgrößen des KNN als Ganzes.

Die Hardwarearchitektur umfasst eine Vielzahl von Recheneinheiten, wobei die Realisierung einer jeden Schicht auf mindestens zwei der Recheneinheiten aufgeteilt ist. So kann beispielsweise eine Hälfte der Eingangsgrößen der Schicht nur der ersten Recheneinheit und die andere Hälfte der Eingangsgrößen nur der zweiten Recheneinheit zugeführt sein. Ebenso kann beispielsweise in einer Ausgangsschicht, die eine Klassifikation vornimmt, die Zuständigkeit für bestimmte Klassen, also etwa für die Erkennung bestimmter Objekte oder Situationen, auf die unterschiedlichen Recheneinheiten aufgeteilt sein. Auf diese Weise können Daten mit sehr hoher Dimensionalität parallel verarbeitet werden.

Erfindungsgemäß vorgesehen ist, dass ein und dieselbe Recheneinheit einen Anteil an der Realisierung mehrerer, aufeinanderfolgender, Schichten hat.

So können etwa drei aufeinanderfolgende Schichten mit zwei parallel arbeitenden Recheneinheiten realisiert sein. Eine Eingangsgröße der ersten Schicht, die einer der Recheneinheiten zugeführt wird, läuft dann innerhalb dieser Recheneinheit alle drei Schichten durch und wird schließlich von dieser Recheneinheit als Ausgangsgröße der dritten Schicht ausgegeben.

Der Begriff der Recheneinheit ist nicht darauf beschränkt, dass verschiedene Recheneinheiten sich auf physisch getrennten Bausteinen befinden müssen, die bei der Herstellung der Hardwarearchitektur zusammengefügt werden. Vielmehr kann beispielsweise eine Anordnung aus einer Vielzahl von Recheneinheiten in ein und demselben anwendungsspezifischen Schaltkreis, ASIC, zusammengefasst sein. Somit bezeichnet der Begriff der Recheneinheit allgemein eine Einheit, Schaltung oder Baugruppe, die zur Realisierung mindestens einer Schicht des KNN beiträgt und selektiv deaktivierbar ist.

Es ist mindestens eine rücksetzbare Abschalteinrichtung vorgesehen, mit der mindestens eine Recheneinheit unabhängig von den ihr zugeführten Eingangsgrößen so selektiv deaktivierbar ist, dass in allen Schichten, zu deren Realisierung diese Recheneinheit beiträgt, mindestens noch eine weitere Recheneinheit aktiviert bleibt.

Es wurde erkannt, dass auf diese Weise zur Laufzeit des KNN ein dynamischer Kompromiss zwischen Rechengenauigkeit einerseits und Energieverbrauch sowie Wärmeentwicklung des KNN andererseits einstellbar ist. In der Regel ist ein Großteil der Berechnungen in KNN robust gegenüber Fehlern, d.h., ein gewisser Anteil an Fehlern in diesen Berechnungen verschlechtert die Qualität der Ausgabe des KNN nur geringfügig. Die Deaktivierung einer Recheneinheit führt dazu, dass bestimmte Zwischenergebnisse vollständig fehlen, was als ein Sonderfall eines Rechenfehlers anzusehen ist.

Die Bedingung, dass in allen Schichten, zu deren Realisierung die deaktivierte Recheneinheit beiträgt, mindestens noch eine weitere Recheneinheit aktiviert bleibt, stellt hierbei sicher, dass das KNN als Ganzes weiterhin funktionsfähig bleibt. Würde eine Schicht des KNN komplett deaktiviert, so wäre die Verarbeitungskette des KNN an dieser Stelle unterbrochen, und das KNN würde keine Ausgabe mehr liefern.

Die Bedingung, dass die Abschalteinrichtung rücksetzbar ist, stellt sicher, dass sich die Deaktivierung von Recheneinheiten der Betriebssituation anpassen kann. Beispielsweise kann es am dringlichsten sein, die jeweils gerade am stärksten wärmebelasteten Recheneinheiten vorübergehend zu deaktivieren, um die Lebensdauer der Hardware zu erhöhen. Ebenso hängt es von der aktuellen Betriebssituation ab, wie stark sich die Deaktivierung einer bestimmten Recheneinheit auf das vom KNN als Ganzes gelieferte Endergebnis auswirkt. Die bisherigen "Pruning"-Ansätze zur Entfernung von Neuronen aus dem KNN sind hingegen statisch: Unabhängig davon, ob die zu entfernenden Neuronen vor, während oder nach dem Training des KNN festgelegt werden, ist diese Festlegung für den gesamten späteren Inferenzbetrieb des KNN bindend.

Dass die Recheneinheit unabhängig von den ihr zugeführten Eingangsgrößen deaktivierbar ist, stellt zum Einen sicher, dass die Deaktivierung von einer übergeordneten Instanz zwangsweise durchgesetzt werden kann. Wenn mit der Deaktivierung beispielsweise das Ziel verfolgt wird, eine Wärmebelastung der Recheneinheit zu vermindern, so hat dieses Ziel möglicherweise die höchste Priorität, um Schäden an der Hardware zu vermeiden. Zum Anderen hat eine von den Eingangsgrößen unabhängige Deaktivierung bei gleicher Auswirkung auf die Rechengenauigkeit des KNN ein viel größeres Potential, den Energieverbrauch der Recheneinheit zu vermindern, als ein bloßes Nullsetzen der Eingangsgrößen.

Die Möglichkeit, Recheneinheiten selektiv zu deaktivieren, ist insbesondere förderlich für eine weitere Miniaturisierung der Hardwarearchitektur. Früher galt die als "Dennard's Scaling" bekannte empirische Beobachtung, dass eine Reduzierung der Transistorgrößen in integrierten Schaltkreisen den Energieverbrauch proportional vermindert. Seit einigen Jahren ist die Reduzierung der Transistorgrößen in Bereiche vorgestoßen, in denen der Energieverbrauch schwächer als proportional sinkt. Je nachdem, welche konkreten Möglichkeiten zur Kühlung zur Verfügung stehen, kann also der Fall eintreten, dass ein gleichzeitiger Dauerbetrieb aller vorhandenen Transistoren nicht mehr möglich ist.

Die selektive Deaktivierung von Recheneinheiten ist aber auch dann sinnvoll, wenn prinzipiell alle vorhandenen Recheneinheiten gleichzeitig betrieben werden könnten. Jede Energieeinsparung spart zugleich auch Kosten und verlängert bei batteriebetriebenen Geräten die Batterielaufzeit. Weiterhin kann es zur Erhöhung der Verfügbarkeit sinnvoll sein, gezielt mehr Recheneinheiten vorzusehen als eigentlich für die Erzielung einer vorgegebenen Genauigkeit benötigt werden. Die überzähligen Recheneinheiten können dann beispielsweise zunächst deaktiviert bleiben und erst dann zugeschaltet werden, wenn andere Recheneinheiten ausfallen.

In einer besonders vorteilhaften Ausgestaltung ist eine Steuereinheit für die selektive Deaktivierung von Recheneinheiten vorgesehen. Die Abschalteinrichtung umfasst mindestens einen durch die Steuereinheit betätigbaren Schalter. Dieser Schalter kann beispielsweise ein Transistor sein, der auf elektrischem Wege schaltbar ist. Der Schalter kann aber beispielsweise auch ein auf optischem Wege schaltbarer Halbleiterschalter oder lichtempfindlicher Widerstand sein.

In einer besonders vorteilhaften Ausgestaltung ist der Schalter so angeordnet, dass der die Zuführung eines Taktsignals, und/oder einer Versorgungsspannung, zu der Recheneinheit zu unterbrechen vermag. Die Unterbrechung der Versorgungsspannung kann den Energieverbrauch der Recheneinheit komplett unterbinden. Wird nur das Taktsignal unterbrochen, wird immer noch der größte Teil des üblichen Energieverbrauchs eingespart. Dabei wird zugleich vermieden, die Recheneinheit bei der späteren Reaktivierung neu initialisieren zu müssen, so dass die Recheneinheit dann schneller wieder zur Verfügung steht.

In der Steuereinheit kann die Deaktivierung und spätere Reaktivierung von Recheneinheiten von beliebigen Bedingungen abhängig gemacht werden. Beispielsweise kann eine Verteilung der ausgelassenen Berechnungen vorgegeben werden. So kann beispielsweise die Berechnung jedes N-ten Neurons ausgelassen werden, wobei N eine natürliche Zahl ist. Statt einer solchen homogenen Verteilung können die Deaktivierungen aber auch basierend auf einer zur Designzeit des KNN getroffenen Abschätzung der Wichtigkeit der einzelnen Rechenergebnisse erfolgen. Berechnungen mit geringer Relevanz werden dann bevorzugt abgeschaltet. Untersuchungen haben gezeigt, dass die Verschlechterung der Ausgabequalität des KNN in diesem Fall geringer ist als im Fall der homogenen Verteilung.

In einer besonders vorteilhaften Ausgestaltung erhält die Steuereinheit mindestens eine von mindestens einer Recheneinheit abgehende Ausgangsgröße, ein Maß für die Schaltaktivität mindestens einer Recheneinheit, ein Maß für den Energieverbrauch mindestens einer Recheneinheit, und/oder ein Maß für die Temperatur mindestens einer Recheneinheit, als Eingabe.

Auf diese Weise kann beispielsweise die Beanspruchung mehrerer Recheneinheiten, die zur Realisierung einer gegebenen Schicht des KNN beitragen, zeitlich und/oder räumlich vergleichmäßigt werden. Somit können Alterungsprozesse der Hardware vermindert werden. Diese Alterungsprozesse sind insbesondere von der Temperatur abhängig. So werden beispielsweise die elektronischen Eigenschaften von Halbleitern durch eine Interdiffusion zwischen benachbarten Bereichen mit verschiedener Dotierung progressiv verschlechtert, wobei die Geschwindigkeit dieser Interdiffusion exponentiell von der Temperatur abhängt.

Die Temperatur der Recheneinheit kann auf beliebige Weise bestimmt werden. Neben einem Temperaturfühler kommt hierfür insbesondere auch beispielsweise eine Wärmebildkamera in Betracht, die die Temperatur vieler Recheneinheiten gleichzeitig in Echtzeit zu erfassen vermag. Eine weitere kostengünstige Möglichkeit ist eine indirekte Bestimmung der Temperatur über die Schaltaktivität. Hierfür misst man die Schaltaktivität über eine bestimmte Zeit und verwendet ein Modell, welches hieraus die erwartete Temperatur der Recheneinheit vorhersagt.

Die selektive Abschaltung von Recheneinheiten ist andererseits nicht zwingend auf das Vorhandensein einer Steuereinheit angewiesen. In einer weiteren vorteilhaften Ausgestaltung enthält mindestens eine Recheneinheit eine Abschalteinrichtung, die die Recheneinheit bei Erfüllung einer ersten Bedingung für die Temperatur der Recheneinheit, und/oder für den Zeitverlauf dieser Temperatur, und/oder für den Zeitverlauf der Schaltaktivität der Recheneinheit, selbsttätig deaktiviert und bei Erfüllung einer zweiten Bedingung für die Temperatur der Recheneinheit, und/oder für den Zeitverlauf dieser Temperatur, und/oder für den Zeitverlauf der Schaltaktivität der Recheneinheit, selbsttätig wieder aktiviert. Es kann dann insbesondere ein Verdrahtungsaufwand zu der zentralen Steuereinheit eingespart werden. Das KNN entwickelt dann eine Eigendynamik in Bezug auf die Verteilung der insgesamt geleisteten Rechenarbeit, die sich unter anderem danach richtet, welche Recheneinheiten konkret wie stark beansprucht werden.

Die Erfindung bezieht sich auch auf ein Verfahren zum Betreiben eines künstlichen neuronalen Netzwerks, KNN. Das KNN umfasst eine Aneinanderreihung aus einer Eingangsschicht, mehreren Verarbeitungsschichten und einer Ausgangsschicht. Jede Schicht bildet einen Satz Eingangsgrößen auf einen Satz Ausgangsgrößen ab. Dabei sind Ausgangsgrößen der Eingangsschicht und einer jeden Verarbeitungsschicht Eingangsgrößen der jeweils in der Aneinanderreihung folgenden Schicht. Die Eingangsgrößen der Eingangsschicht sind zugleich auch die Eingangsgrößen des KNN als Ganzes. Die Ausgangsgrößen der Ausgangsschicht sind zugleich auch die Ausgangsgrößen des KNN als Ganzes.

Das KNN ist in einer Vielzahl von Recheneinheiten dergestalt realisiert, dass die Realisierung einer jeden Schicht auf mindestens zwei der Recheneinheiten aufgeteilt ist.

Mindestens eine Recheneinheit wird bei Erfüllung einer vorgegebenen deaktivierenden Bedingung während des Betriebes des KNN unabhängig von den ihr zugeführten Eingangsgrößen so selektiv deaktiviert, dass in allen Schichten, zu deren Realisierung diese Recheneinheit beiträgt, mindestens noch eine weitere Recheneinheit aktiviert bleibt. Die deaktivierte Recheneinheit wird bei Erfüllung einer vorgegebenen aktivierenden Bedingung während des Betriebes des KNN wieder aktiviert.

Analog zum zuvor für die Hardwarearchitektur Beschriebenen wird auf diese Weise zur Laufzeit des KNN ein dynamischer Kompromiss zwischen Rechengenauigkeit einerseits und Energieverbrauch sowie Wärmeentwicklung des KNN andererseits realisiert.

In einer besonders vorteilhaften Ausgestaltung beinhaltet die deaktivierende Bedingung, und/oder die aktivierende Bedingung, ein Maß für die Qualität mindestens einer Eingangsgröße, ein Maß für die zeitliche und/oder räumliche Änderungsrate mindestens einer Eingangsgröße, ein Maß für eine Qualitätsanforderung an mindestens eine Ausgangsgröße, und/oder ein Maß für eine Relevanz mindestens einer Ausgangsgröße.

Wird beispielsweise eine hohe Qualität der die Eingangsgrößen des KNN repräsentierenden Eingangsdaten festgestellt, können bei gleicher Ausgabequalität mehr Fehler durch das Deaktivieren interner Rechenschritte des KNN toleriert werden als bei einer schlechten Qualität der Eingangsdaten, da erwartet werden kann, dass die Ausgabequalität des DNNs bei hoher Eingangsdatenqualität ein höheres Grundniveau hat. Beispielsweise kann ein gutes Signal-Rausch-Verhältnis eines Kamerabildes aufgrund guter Lichtverhältnisse als ein Anzeichen für eine hohe Qualität der Eingangsdaten gewertet werden.

Die Qualitätsanforderung an Ausgangsgrößen kann beispielsweise davon abhängen, ob für die den Ausgangsgrößen zugrunde liegende Fragestellung weitere Informationsquellen verfügbar sind. Wenn die Unsicherheit in der Ausgabe des KNN durch zusätzliche Informationsquellen wieder kompensiert werden kann, können mehr Recheneinheiten deaktiviert werden. Solche redundanten Informationsquellen können beispielsweise weitere unterschiedliche Sensordatenverarbeitungssysteme sein. Ebenso lässt sich die Ausgabequalität des KNN beim Ausfall von redundanten Informationsquellen durch Reaktivieren der zuvor deaktivierten Recheneinheiten wieder erhöhen.

Die Qualitätsanforderung an Ausgangsgrößen kann beispielsweise auch davon abhängen, inwieweit Ergebnisse aus vorherigen Zeitschritten, oder auch sonstige Kontextinformationen, vorliegen. Wenn das KNN beispielsweise einen zeitlich oder räumlich zusammenhängenden Strom von Eingangsdaten verarbeitet (z.B. eine Videodatensequenz), können Informationen aus der zeitlichen oder räumlichen Nachbarschaft des aktuell zu verarbeitenden Eingangsdatums dazu ausgenutzt werden, die Deaktivierung von Recheneinheiten in bestimmten Teilen des Netzes dynamisch anzupassen. Wird beispielsweise durch das KNN ein Objekt in einer Videosequenz verfolgt, so sind hierfür bestimmte Teile im neuronalen Netz relevant, während andere momentan keinen Beitrag hierzu leisten. Die relevanten Rechenschritte werden durch die Eigenschaften des verfolgten Objektes (Features) sowie die Position des Objektes im Bild bestimmt. Wurden im Zeitschritt t die Features und Position des Objektes durch das KNN bestimmt, dann kann diese Information im darauffolgenden Zeitschritt dazu genutzt werden, in Teilen des Netzes, welche momentan irrelevante Features verarbeiten oder für momentan irrelevante Regionen des Eingangsbildes zuständig sind, mehr Recheneinheiten zu deaktivieren. Bei den momentan irrelevanten Neuronen kann angenommen werden, dass ihr Ausgabewert ohnehin betragsmäßig klein oder null ist, so dass durch das Abschalten der entsprechenden Recheneinheiten kein großer Fehler in der Ausgabe des KNNs entsteht. Das Verfahren kann durch eine Bewegungsprädiktion der Bildinformationen (z.B. durch Bestimmung des optischen Flusses) unterstützt werden.

Die Relevanzen einzelner Rechenergebnisse innerhalb eines neuronalen Netzes können mit Hilfe verschiedener Methoden abgeschätzt werden.

Eine beispielhafte Möglichkeit besteht darin, das Ausschalten bestimmter Recheneinheiten im KNN für eine Menge an Trainingsdaten zu simulieren, und den Einfluss auf die Ausgabequalität des Netzes zu messen. Die Simulationen können entweder auf der tatsächlichen Hardware, oder in einem virtuellen Prototyp der Hardware, oder in einer reinen Softwaresimulationsumgebung erfolgen. Wird beim Deaktivieren bestimmter Rechenschritte eine starke Verringerung der Ausgabequalität über die Trainingsdatenverteilung festgestellt, so haben diese Berechnungen eine hohe Relevanz bei diesen Trainingsdaten.

Die Änderungen der Ausgabewerte des DNNs beim Weglassen bestimmter Rechenschritte kann auch beispielsweise analytisch ermittelt werden. Hierfür können z.B. die Gradienten der Ausgabewerte in Bezug auf die Zwischenergebnisse berechnet werden, oder es kann eine Dekomposition der Ausgabefunktion des neuronalen Netzes in die Beiträge einzelner Zwischenergebnisse vorgenommen werden.

In beiden beispielhaften Ansätzen können sowohl globale Relevanzen, d.h. Relevanzen die sich über eine komplette (Trainings-) Eingangsdatenverteilung ergeben, bestimmt werden, als auch Relevanzen bestimmter Gruppen von Eingangsdaten. So können z.B. Bilder, die gleiche oder ähnliche Objekte darstellen, oder Bilder, bei denen das relevante Objekt in einer bestimmten Region liegt zusammengefasst werden, um separate Relevanzwerte für diese Gruppen zu bestimmen. Diese Information kann dann eingesetzt werden, um bei einem gegebenen Kontext bestimmte Teile des KNN bevorzugt zu deaktivieren.

In einer weiteren besonders vorteilhaften Ausgestaltung beinhaltet die deaktivierende Bedingung, und/oder die aktivierende Bedingung, die Temperatur mindestens einer Recheneinheit, und/oder die Temperatur mindestens einer an diese Recheneinheit gekoppelten Wärmesenke, und/oder den Zeitverlauf der Schaltaktivität dieser Recheneinheit. Auf diese Weise können nach dem zuvor Beschriebenen insbesondere Alterungsprozesse der Hardware vergleichmäßigt werden. Weiterhin kann beispielsweise die Wärmekapazität einer Wärmesenke genutzt werden, um bei kurzfristig erhöhtem Bedarf die Leistung von mehr Recheneinheiten abzurufen.

In einer weiteren besonders vorteilhaften Ausgestaltung dient das KNN der Erkennung von Objekten und/oder Situationen anhand von Eingangsgrößen. Es wird anhand einer Kontextinformation ermittelt, dass das Vorhandensein einer ersten Teilmenge der Objekte und/oder Situationen unwahrscheinlicher ist als das Vorhandensein einer zweiten Teilmenge der Objekte und/oder Situationen. Dabei kann diese Kontextinformation aus einer beliebigen Quelle stammen. Neben einer externen Quelle kommt alternativ oder in Kombination insbesondere beispielsweise in Betracht, die Kontextinformation aus dem zeitlichen Verlauf der Eingangsgrößen selbst zu ermitteln. Die Deaktivierung von Recheneinheiten, die überwiegend der Erkennung von Objekten und/oder Situationen aus der ersten Teilmenge dienen, wird dann gegenüber der Deaktivierung von Recheneinheiten, die überwiegend der Erkennung von Objekten und/oder Situationen aus der zweiten Teilmenge dienen, bevorzugt.

Auf diese Weise kann die in dem KNN eingesetzte Energie auf die Erkennung derjenigen Objekte und/oder Situationen fokussiert werden, deren Vorhandensein wahrscheinlicher ist. Insbesondere Systeme für die Erkennung von Objekten und/oder Situationen im Umfeld von Fahrzeugen, beispielsweise für das zumindest teilweise automatisierte Fahren, sind für die Erkennung einer sehr großen Anzahl von Objekten oder Situationen ausgelegt. Beispielsweise muss ein zumindest teilweise automatisiert fahrendes Fahrzeug auf alle aktuell gültigen Verkehrszeichen reagieren können, um regelkonform zu fahren. Allerdings ist nicht zu jeder Zeit gleichermaßen mit dem Auftreten aller möglichen Verkehrszeichen und Situationen zu rechnen. So gibt es beispielsweise auf Autobahnen weder Ampeln noch Fußgängerüberwege oder Bahnübergänge. Ebenso ist weitab von Gewässern nicht mit einem Warnschild zu rechnen, dass die Straße auf ein Ufer zu führt. Die für die Erkennung solcher unwahrscheinlichen Objekte oder Situationen zuständigen Recheneinheiten können also bevorzugt deaktiviert werden, ohne dass die Betriebssicherheit des Fahrzeugs leidet.

Somit dient in einer besonders vorteilhaften Ausgestaltung das KNN der Erkennung von Objekten und/oder Situationen im Umfeld eines Fahrzeugs, wobei die zusätzliche Kontextinformation die Position des Fahrzeugs, und/oder die Straßenkategorie einer aktuell von dem Fahrzeug befahrenen Straße, umfasst.

Eine anhand dieser Kontextinformation gesteuerte Deaktivierung von Recheneinheiten lenkt den Nichtdeterminismus, den die Deaktivierung zwangsläufig in das KNN einführt, in geordnete Bahnen. Es kann dann insbesondere im Hinblick auf die Zulassung für den öffentlichen Straßenverkehr plausibel gemacht werden, dass die Einsparung von Energie und Abwärme, die mit der Deaktivierung von Recheneinheiten bewirkt wird, nicht mit einer Gefahrerhöhung erkauft wird.

Sofern das KNN hardwaremäßig die Möglichkeit vorsieht, Recheneinheiten selektiv zu deaktivieren, kann das Verfahren ganz oder teilweise softwaregesteuert ausgeführt werden. Die entsprechende Software kann dann beispielsweise als Update oder Upgrade zu einem bestehenden Steuergerät verkauft werden und ist insofern ein eigenständiges Produkt. Daher bezieht sich die Erfindung auch auf ein Computerprogramm mit maschinenlesbaren Anweisungen, die, wenn sie auf einem Computer, und/oder auf einem Steuergerät, ausgeführt werden, den Computer, und/oder das Steuergerät, dazu veranlassen, das von der Erfindung bereitgestellte Verfahren auszuführen. Ebenso bezieht sich die Erfindung auch auf einen maschinenlesbaren Datenträger oder ein Downloadprodukt mit dem Computerprogramm.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: Ausführungsbeispiel der Hardwarearchitektur 10 für ein KNN 1;
- Figur 2: Ausführungsbeispiel des Verfahrens 100.

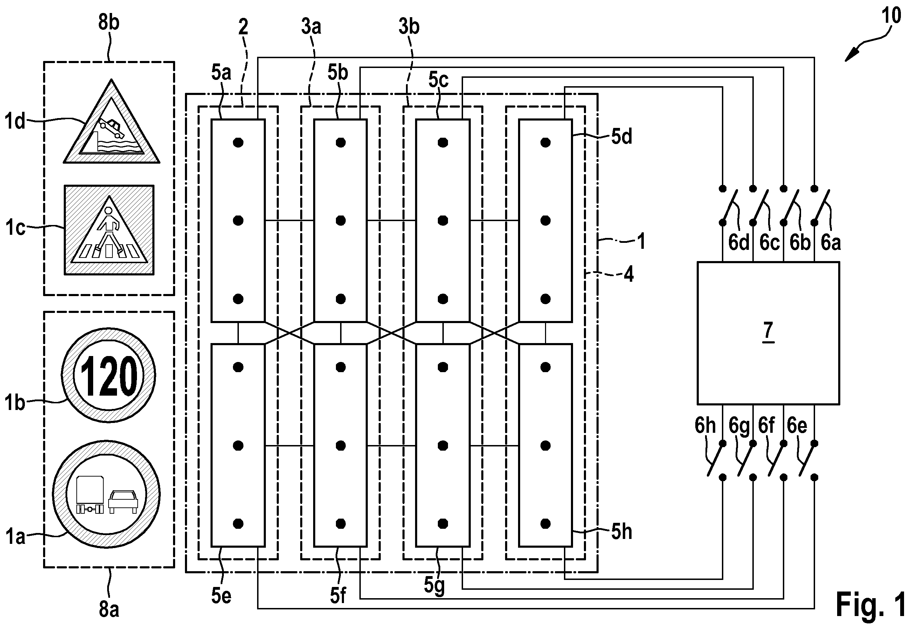

Nach Figur 1 umfasst das beispielhaft vereinfacht skizzierte KNN 1 eine Eingangsschicht 2, zwei Verarbeitungsschichten 3a und 3b sowie eine Ausgangsschicht 4. Die Hardwarearchitektur 10 realisiert dieses KNN 1 mit Hilfe von acht Recheneinheiten 5a-5h, die untereinander verbunden sind. Jede Recheneinheit 5a-5h realisiert jeweils drei als ausgefüllte Punkte dargestellte Neuronen. Zur Realisierung jeder der Schichten 2, 3a, 3b, 4 tragen jeweils zwei der Recheneinheiten 5a-5h bei.

Jeder der Recheneinheiten 5a-5h ist eine als Schalter in der Zuführung einer Versorgungsspannung und/oder eines Taktsignals ausgeführte Abschalteinrichtung 6a-6h zugeordnet, über die die jeweilige Recheneinheit außer Betrieb genommen werden kann. Alle Abschalteinrichtungen 6a-6h werden über eine zentrale Steuereinheit 7 angesteuert.

Das KNN ist zur Erkennung von Objekten im Umfeld eines Fahrzeugs ausgebildet. In Figur 1 sind nur vier Verkehrszeichen als beispielhafte Objekte 1a-1d eingezeichnet. In einer beispielhaften Fahrsituation auf der Autobahn ist das Vorhandensein eines Verkehrszeichens aus einer ersten Teilmenge 8a, hier eines LKW-Überholverbots 1a oder einer Geschwindigkeitsbeschränkung 1b, denkbar. Ein Verkehrszeichen aus einer zweiten Teilmenge 8b, hier ein Zeichen 1c für einen Fußgängerüberweg oder ein Gefahrzeichen 1d für die Warnung vor einem Ufer, kommt hingegen auf einer Autobahn regulär nicht vor. Recheneinheiten, die im Wesentlichen für die Erkennung dieser Verkehrszeichen 1c, 1d zuständig sind, können daher bei der Fahrt auf der Autobahn ohne Verlust an Verkehrssicherheit deaktiviert werden.

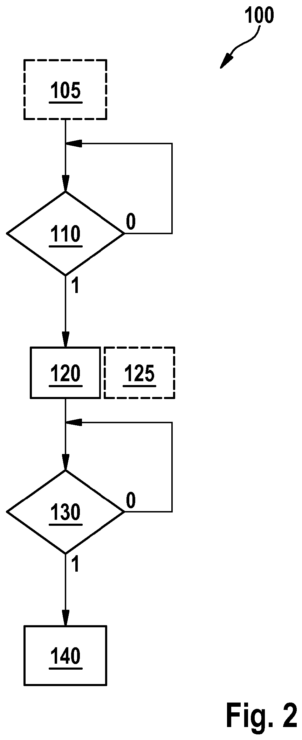

Figur 2 zeigt ein Ausführungsbeispiel des Verfahrens 100. Gemäß dem optionalen Schritt 105 werden anhand einer zusätzlichen Kontextinformation, etwa der Straßenkategorie der aktuell befahrenen Straße, die Teilmenge 8a der eher wahrscheinlich vorkommenden Objekte 1a, 1b und die Teilmenge 8b der eher unwahrscheinlich vorkommenden Objekte 1c, 1d ermittelt. Gemäß Schritt 110 wird fortwährend überprüft, ob die deaktivierende Bedingung erfüllt ist. Ist dies der Fall (Wahrheitswert 1), so werden in Schritt 120 Recheneinheiten 5a-5h deaktiviert. Sofern in Schritt 105 die Teilmenge 8b eher unwahrscheinlich vorkommender Objekte 1c, 1d ermittelt wurde, wird gemäß Schritt 125 die Deaktivierung von Recheneinheiten 5a-5h, die überwiegend der Erkennung von Objekten 1c, 1d aus der Teilmenge 8b dienen, bevorzugt.

Gemäß Schritt 130 wird fortwährend geprüft, ob eine aktivierende Bedingung für die Reaktivierung der zuvor deaktivierten Recheneinheiten 5a-5h erfüllt ist. Ist dies der Fall (Wahrheitswert 1), werden diese Recheneinheiten 5a-5h in Schritt 140 wieder aktiviert.

## Patentansprüche

1. Hardwarearchitektur (10) für ein künstliches neuronales Netzwerk, KNN (1), wobei das KNN (1) eine Aneinanderreihung aus Schichten (2,3a,3b,4) umfasst,
wobei jede der Schichten (2, 3a, 3b, 4) seine Eingangsgröße auf eine Ausgangsgröße mittels einer Mehrzahl von Neuronen abbildet und wobei jeweils die Ausgangsgrößen der Schichten (2) Eingangsgrößen der jeweils in der Aneinanderreihung folgenden Schicht (3a, 3b, 4) sind,
wobei die Hardwarearchitektur (10) eine Vielzahl von Recheneinheiten (5a-5h) umfasst,
wobei eine Realisierung einer jeden Schicht (2, 3a, 3b, 4) auf mindestens zwei der Recheneinheiten (5a-5h) aufgeteilt ist, wobei beim Aufteilen der Realisierung, die Berechnung der Mehrzahl der Neuronen auf zumindest zwei Recheneinheiten aufgeteilt wird,
wobei wenigstens eine der Recheneinheiten einen Anteil der Realisierung an mehreren Schichten hat,
wobei zu dieser Realisierung eine Eingangsgröße einer ersten der mehreren Schichten der Recheneinheit zugeführt wird, innerhalb dieser Recheneinheit alle aufeinanderfolgenden Schichten der mehreren Schichten durchläuft und schließlich von dieser Recheneinheit als Ausgangsgröße der letzten der mehreren Schichten ausgegeben wird, und
wobei die Hardwarearchitektur (10) mindestens eine rücksetzbare Abschalteinrichtung (6a-6h) umfasst, die eingerichtet ist, mindestens eine Recheneinheit (5a-5h) selektiv zu deaktivieren sodass in allen Schichten (2, 3a, 3b, 4), zu deren Realisierung diese Recheneinheit (5a-5h) beiträgt, mindestens noch eine weitere Recheneinheit (5a-5h) aktiviert bleibt.

2. Hardwarearchitektur (10) nach Anspruch 1, wobei eine Steuereinheit (7) für die selektive Deaktivierung von Recheneinheiten (5a-5h) vorgesehen ist und wobei die Abschalteinrichtung (6a-6h) mindestens einen durch die Steuereinheit (7) betätigbaren Schalter umfasst.

3. Hardwarearchitektur (10) nach Anspruch 2, wobei der Schalter so angeordnet ist, dass er die Zuführung eines Taktsignals, und/oder einer Versorgungsspannung, zu der Recheneinheit (5a-5h) zu unterbrechen vermag.

4. Hardwarearchitektur (10) nach einem der Ansprüche 2 bis 3, wobei die Steuereinheit (7) mindestens eine von mindestens einer Recheneinheit (5a-5h) abgehende Ausgangsgröße, ein Maß für die Schaltaktivität mindestens einer Recheneinheit (5a-5h), ein Maß für den Energieverbrauch mindestens einer Recheneinheit (5a-5h), und/oder ein Maß für die Temperatur mindestens einer Recheneinheit (5a-5h), als Eingabe erhält.

5. Hardwarearchitektur (10) nach einem der Ansprüche 1 bis 4, wobei mindestens eine Recheneinheit (5a-5h) eine Abschalteinrichtung (6a-6h) enthält, die die Recheneinheit (5a-5h) bei Erfüllung einer ersten Bedingung für die Temperatur der Recheneinheit (5a-5h), und/oder für den Zeitverlauf dieser Temperatur, und/oder für den Zeitverlauf der Schaltaktivität der Recheneinheit (5a-5h), selbsttätig deaktiviert und bei Erfüllung einer zweiten Bedingung für die Temperatur der Recheneinheit (5a-5h), und/oder für den Zeitverlauf dieser Temperatur, und/oder für den Zeitverlauf der Schaltaktivität der Recheneinheit (5a-5h), selbsttätig wieder aktiviert.

6. Verfahren (100) zum Betreiben eines künstlichen neuronalen Netzwerks, KNN (1), wobei das KNN (1) eine Aneinanderreihung aus Schichten (2,3a,3b,4) umfasst,
wobei jede der Schichten (2, 3a, 3b, 4) seine Eingangsgröße auf eine Ausgangsgröße mittels einer Mehrzahl von Neuronen abbildet und
wobei jeweils Ausgangsgrößen der Schichten (2) Eingangsgrößen der jeweils in der Aneinanderreihung folgenden Schicht (3a, 3b, 4) sind,
wobei das KNN (1) in einer Vielzahl von Recheneinheiten (5a-5h) dergestalt realisiert ist, dass eine Realisierung einer jeden Schicht (2, 3a, 3b, 4) auf mindestens zwei der Recheneinheiten (5a-5h) aufgeteilt ist, wobei beim Aufteilen der Realisierung, die Berechnung der Mehrzahl der Neuronen auf zumindest zwei Recheneinheiten aufgeteilt wird,
wobei wenigstens eine der Recheneinheiten einen Anteil der Realisierung an mehreren Schichten hat,
wobei zu dieser Realisierung eine Eingangsgröße einer ersten der mehreren Schichten der Recheneinheit zugeführt wird, innerhalb dieser Recheneinheit alle aufeinanderfolgenden Schichten der mehreren Schichten durchläuft und schließlich von dieser Recheneinheit als Ausgangsgröße der letzten der mehreren Schichten ausgegeben wird,
wobei mindestens eine Recheneinheit (5a-5h) bei Erfüllung einer vorgegebenen deaktivierenden Bedingung (110) während des Betriebes des KNN (1) so selektiv deaktiviert wird (120), dass in allen Schichten (2, 3a, 3b, 4), zu deren Realisierung diese Recheneinheit (5a-5h) beiträgt, mindestens noch eine weitere Recheneinheit (5a-5h) aktiviert bleibt,
wobei die deaktivierte Recheneinheit (5a-5h) bei Erfüllung einer vorgegebenen aktivierenden Bedingung (130) während des Betriebes des KNN (1) wieder aktiviert wird (140).

7. Verfahren (100) nach Anspruch 6, wobei die deaktivierende Bedingung (110), und/oder die aktivierende Bedingung (130), ferner ein Maß für die Qualität mindestens einer Eingangsgröße, ein Maß für die zeitliche und/oder räumliche Änderungsrate mindestens einer Eingangsgröße, ein Maß für eine Qualitätsanforderung an mindestens eine Ausgangsgröße, und/oder ein Maß für eine Relevanz mindestens einer Ausgangsgröße, beinhaltet.

8. Verfahren (100) nach einem der Ansprüche 6 bis 7, wobei die deaktivierende Bedingung (110), und/oder die aktivierende Bedingung (130), ferner die Temperatur mindestens einer Recheneinheit (5a-5h), und/oder die Temperatur mindestens einer an diese Recheneinheit (5a-5h) gekoppelten Wärmesenke, und/oder den Zeitverlauf der Schaltaktivität dieser Recheneinheit (5a-5h), beinhaltet.

9. Verfahren (100) nach einem der Ansprüche 6 bis 8, wobei das KNN (1) der Erkennung von Objekten und/oder Situationen (1a-1d) anhand von Eingangsgrößen dient, wobei anhand einer Kontextinformation ermittelt wird (105), dass das Vorhandensein einer ersten Teilmenge (8a) der Objekte und/oder Situationen (1a-1d) unwahrscheinlicher ist als das Vorhandensein einer zweiten Teilmenge (8b) der Objekte und/oder Situationen (1a-1d), und wobei die Deaktivierung (120) von Recheneinheiten (5a-5h), die überwiegend der Erkennung von Objekten und/oder Situationen (1a, 1b) aus der ersten Teilmenge (8a) dienen, gegenüber der Deaktivierung (120) von Recheneinheiten (5a-5h), die überwiegend der Erkennung von Objekten und/oder Situationen (1c, 1d) aus der zweiten Teilmenge (8b) dienen, bevorzugt wird (125).

10. Verfahren (100) nach Anspruch 9, wobei das KNN (1) der Erkennung von Objekten und/oder Situationen (1a-1d) im Umfeld eines Fahrzeugs dient und wobei die zusätzliche Kontextinformation die Position des Fahrzeugs, und/oder die Straßenkategorie einer aktuell von dem Fahrzeug befahrenen Straße, umfasst.

11. Computerprogramm, enthaltend maschinenlesbare Anweisungen, die, wenn sie auf einem Computer umfassend eine Mehrzahl von Recheneinheiten, ausgeführt werden, den Computer dazu veranlassen, ein Verfahren (100) nach einem der Ansprüche 6 bis 10 auszuführen.

## Claims

1. Hardware architecture (10) for an artificial neural network, ANN (1), wherein the ANN (1) comprises a sequence of layers (2, 3a, 3b, 4),
wherein each of the layers (2, 3a, 3b, 4) maps its input variable to an output variable by means of a plurality of neurons, and wherein the output variables of the layers (2) are each input variables of the respective following layer (3a, 3b, 4) in the sequence,
wherein the hardware architecture (10) comprises a multiplicity of computing units (5a-5h),
wherein a realization of each layer (2, 3a, 3b, 4) is divided between at least two of the computing units (5a-5h), wherein, when dividing the realization, the calculation of the plurality of the neurons is divided between at least two computing units,
wherein at least one of the computing units has a proportion of the realization on a plurality of layers,
wherein, for this realization, an input variable of a first one of the plurality of layers is supplied to the computing unit, passes through all successive layers of the plurality of layers within this computing unit, and is finally output from this computing unit as an output variable of the last one of the plurality of layers, and
wherein the hardware architecture (10) comprises at least one resettable shutdown apparatus (6a-6h) that is configured to selectively deactivate at least one computing unit (5a-5h) such that at least one further computing unit (5a-5h) remains activated in all layers (2, 3a, 3b, 4) to the realization of which this computing unit (5a-5h) contributes.

2. Hardware architecture (10) according to Claim 1, wherein a control unit (7) is provided for the selective deactivation of computing units (5a-5h), and wherein the shutdown apparatus (6a-6h) comprises at least one switch that is able to be actuated by the control unit (7).

3. Hardware architecture (10) according to Claim 2, wherein the switch is arranged in such a way that it is able to interrupt the supply of a clock signal and/or of a supply voltage to the computing unit (5a-5h).

4. Hardware architecture (10) according to either of Claims 2 and 3, wherein the control unit (7) contains, as input, at least one output variable leaving at least one computing unit (5a-5h), a measure of the switching activity of at least one computing unit (5a-5h), a measure of the energy consumption of at least one computing unit (5a-5h), and/or a measure of the temperature of at least one computing unit (5a-5h).

5. Hardware architecture (10) according to one of Claims 1 to 4, wherein at least one computing unit (5a-5h) contains a shutdown apparatus (6a-6h) that automatically deactivates the computing unit (5a-5h) if a first condition for the temperature of the computing unit (5a-5h), and/or for the temporal profile of this temperature, and/or for the temporal profile of the switching activity of the computing unit (5a-5h), is met, and automatically reactivates said computing unit if a second condition for the temperature of the computing unit (5a-5h), and/or for the temporal profile of this temperature, and/or for the temporal profile of the switching activity of the computing unit (5a-5h), is met.

6. Method (100) for operating an artificial neural network, ANN (1), wherein the ANN (1) comprises a sequence of layers (2, 3a, 3b, 4),
wherein each of the layers (2, 3a, 3b, 4) maps its input variable to an output variable by means of a plurality of neurons and
wherein output variables of the layers (2) are each input variables of the respective following layer (3a, 3b, 4) in the sequence,
wherein the ANN (1) is realized in a multiplicity of computing units (5a-5h) in such a way that a realization of each layer (2, 3a, 3b, 4) is divided between at least two of the computing units (5a-5h), wherein, when dividing the realization, the calculation of the plurality of the neurons is divided between at least two computing units,
wherein at least one of the computing units has a proportion of the realization on a plurality of layers,
wherein, for this realization, an input variable of a first one of the plurality of layers is supplied to the computing unit, passes through all successive layers of the plurality of layers within this computing unit, and is finally output from this computing unit as an output variable of the last one of the plurality of layers,
wherein, if a predetermined deactivating condition (110) is met during operation of the ANN (1), at least one computing unit (5a-5h) is selectively deactivated (120) in such a way that at least one further computing unit (5a-5h) remains activated in all layers (2, 3a, 3b, 4) to the realization of which this computing unit (5a-5h) contributes.
wherein, if a predetermined activating condition (130) is met during operation of the ANN (1), the deactivated computing unit (5a-5h) is reactivated (140).

7. Method (100) according to Claim 6, wherein the deactivating condition (110) and/or the activating condition (130) also contain/contains a measure of the quality of at least one input variable, a measure of the temporal and/or spatial rate of change of at least one input variable, a measure of a quality requirement of at least one output variable, and/or a measure of a relevance of at least one output variable.

8. Method (100) according to either of Claims 6 and 7, wherein the deactivating condition (110) and/or the activating condition (130) also contain/contains the temperature of at least one computing unit (5a-5h), and/or the temperature of at least one heat sink coupled to this computing unit (5a-5h), and/or the temporal profile of the switching activity of this computing unit (5a-5h).

9. Method (100) according to one of Claims 6 to 8, wherein the ANN (1) is used to recognize objects and/or situations (1a-1d) on the basis of input variables, wherein, on the basis of an item of context information, it is ascertained (105) that the presence of a first subset (8a) of the objects and/or situations (1a-1d) is less likely than the presence of a second subset (8b) of the objects and/or situations (1a-1d), and wherein the deactivation (120) of computing units (5a-5h) that are predominantly used to recognize objects and/or situations (1a, 1b) from the first subset (8a) is preferred (125) over the deactivation (120) of computing units (5a-5h) that are predominantly used to recognize objects and/or situations (1c, 1d) from the second subset (8b).

10. Method (100) according to Claim 9, wherein the ANN (1) is used to recognize objects and/or situations (1a-1d) in the surroundings of a vehicle, and wherein the additional context information comprises the position of the vehicle and/or the road category of a road currently being travelled on by the vehicle.

11. Computer program containing machine-readable instructions which, when executed on a computer comprising a plurality of computing units, cause the computer to carry out a method (100) according to one of Claims 6 to 10.

## Revendications

1. Architecture matérielle (10) pour un réseau neuronal artificiel, KNN (1), dans laquelle le KNN (1) comprend une séquence de couches (2, 3a, 3b, 4), chacune des couches (2, 3a, 3b, 4) faisant correspondre sa variable d'entrée à une variable de sortie au moyen d'une pluralité de neurones, et les variables de sortie des couches (2) étant respectivement des variables d'entrée de la couche (3a, 3b, 4) suivant respectivement dans la séquence, l'architecture matérielle (10) comprenant une pluralité d'unités de calcul (5a-5h),
une réalisation de chaque couche (2, 3a, 3b, 4) étant répartie sur au moins deux des unités de calcul (5a-5h), le calcul de la pluralité des neurones étant réparti sur au moins deux unités de calcul lors de la répartition de la réalisation,
au moins l'une des unités de calcul prenant part à la réalisation au niveau de plusieurs couches,
une variable d'entrée d'une première de la pluralité de couches, pour cette réalisation, étant fournie à l'unité de calcul, traversant toutes les couches successives de la pluralité de couches à l'intérieur de cette unité de calcul et étant enfin délivrée par cette unité de calcul en tant que variable de sortie de la dernière de la pluralité de couches, et
l'architecture matérielle (10) comprenant au moins un dispositif d'arrêt réinitia-lisable (6a-6h) qui est configuré pour désactiver sélectivement au moins une unité de calcul (5a-5h), de sorte qu'au moins une autre unité de calcul (5a-5h) reste activée dans toutes les couches (2, 3a, 3b, 4) à la réalisation desquelles cette unité de calcul (5a-5h) contribue.

2. Architecture matérielle (10) selon la revendication 1, dans laquelle une unité de commande (7) est prévue pour la désactivation sélective d'unités de calcul (5a-5h), et dans laquelle le dispositif d'arrêt (6a-6h) comprend au moins un commutateur qui peut être actionné par l'unité de commande (7).

3. Architecture matérielle (10) selon la revendication 2, dans laquelle le commutateur est agencé de telle sorte qu'il est capable d'interrompre la fourniture d'un signal d'horloge et/ou d'une tension d'alimentation à l'unité de calcul (5a-5h).

4. Architecture matérielle (10) selon l'une quelconque des revendications 2 à 3, dans laquelle l'unité de commande (7) reçoit en entrée au moins une variable de sortie provenant d'au moins une unité de calcul (5a-5h), une mesure de l'activité de commutation d'au moins une unité de calcul (5a-5h), une mesure de la consommation d'énergie d'au moins une unité de calcul (5a-5h), et/ou une mesure de la température d'au moins une unité de calcul (5a-5h).

5. Architecture matérielle (10) selon l'une quelconque des revendications 1 à 4, dans laquelle au moins une unité de calcul (5a-5h) comprend un dispositif d'arrêt (6a-6h) qui désactive automatiquement l'unité de calcul (5a-5h) en cas de satisfaction d'une première condition relative à la température de l'unité de calcul (5a-5h) et/ou au profil temporel de cette température, et/ou au profil temporel de l'activité de commutation de l'unité de calcul (5a-5h), et la réactive automatiquement en cas de satisfaction d'une seconde condition relative à la température de l'unité de calcul (5a-5h) et/ou au profil temporel de cette température et/ou au profil temporel de l'activité de commutation de l'unité de calcul (5a-5h).

6. Procédé (100) pour faire fonctionner un réseau neuronal artificiel, KNN (1), dans lequel le KNN (1) comprend une série de couches (2, 3a, 3b, 4), chacune des couches (2, 3a, 3b, 4) faisant correspondre sa variable d'entrée à une variable de sortie au moyen d'une pluralité de neurones et
les variables de sortie des couches (2) étant respectivement des variables d'entrée de la couche (3a, 3b, 4) suivant respectivement dans la séquence, le KNN (1) étant réalisé dans une pluralité d'unités de calcul (5a-5h) de telle sorte qu'une réalisation de chacune des couches (2, 3a, 3b, 4) soit répartie sur au moins deux des unités de calcul (5a-5h), le calcul de la pluralité de neurones étant réparti, lors de la répartition de la réalisation, sur au moins deux unités de calcul,
au moins l'une des unités de calcul prenant part à la réalisation au niveau de plusieurs couches,
une variable d'entrée d'une première de la pluralité de couches, pour cette réalisation, étant fournie à l'unité de calcul, traversant toutes les couches successives de la pluralité de couches à l'intérieur de cette unité de calcul et étant enfin délivrée par cette unité de calcul en tant que variable de sortie de la dernière de la pluralité de couches,
au moins une unité de calcul (5a-5h) étant sélectivement désactivée (120) en cas de satisfaction d'une condition de désactivation prédéfinie (110) pendant le fonctionnement du KNN (1), de sorte qu'au moins une autre unité de calcul (5a-5h) reste activée dans toutes les couches (2, 3a, 3b, 4) à la réalisation desquelles cette unité de calcul (5a-5h) contribue,
l'unité de calcul désactivée (5a-5h) étant à nouveau activée (140) en cas de satisfaction d'une condition d'activation prédéfinie (130) pendant le fonctionnement du KNN (1).

7. Procédé (100) selon la revendication 6, dans lequel la condition de désactivation (110) et/ou la condition d'activation (130) comprennent en outre une mesure de la qualité d'au moins une variable d'entrée, une mesure du taux de variation temporelle et/ou spatiale d'au moins une variable d'entrée, une mesure d'une exigence de qualité pour au moins une variable de sortie, et/ou une mesure de la pertinence d'au moins une variable de sortie.

8. Procédé (100) selon l'une quelconque des revendications 6 à 7, dans lequel la condition de désactivation (110) et/ou la condition d'activation (130) comprennent en outre la température d'au moins une unité de calcul (5a-5h) et/ou la température d'au moins un dissipateur thermique couplé à cette unité de calcul (5a-5h) et/ou le profil temporel de l'activité de commutation de cette unité de calcul (5a-5h).

9. Procédé (100) selon l'une quelconque des revendications 6 à 8, dans lequel le KNN (1) sert à identifier des objets et/ou des situations (1a-1d) sur la base de variables d'entrée, dans lequel il est déterminé (105) sur la base d'informations de contexte que la présence d'un premier sous-ensemble (8a) des objets et/ou situations (1a-1d) est plus improbable que la présence d'un second sous-ensemble (8b) des objets et/ou situations (1a-1d), et dans lequel la désactivation (120) d'unités de calcul (5a-5h) qui servent principalement à la reconnaissance d'objets et/ou de situations (1a, 1b) dans le premier sous-ensemble (8a), est préférée (125) à la désactivation (120) d'unités de calcul (5a-5h) qui servent principalement à la reconnaissance d'objets et/ou de situations (1c, 1d) dans le second sous-ensemble (8b).

10. Procédé (100) selon la revendication 9, dans lequel le KNN (1) sert à détecter des objets et/ou des situations (1a-1d) dans l'environnement d'un véhicule, et dans lequel les informations contextuelles supplémentaires comprennent la position du véhicule et/ou la catégorie de route d'une route actuellement parcourue par le véhicule.

11. Programme d'ordinateur contenant des instructions lisibles par machine qui, lorsqu'elles sont exécutées sur un ordinateur comprenant une pluralité d'unités de calcul, amènent l'ordinateur à mettre en œuvre un procédé (100) selon l'une quelconque des revendications 6 à 10.
